# EUROPÄISCHE PATENTSCHRIFT

(11) **EP 1 013 737 B1**
(45) Veröffentlichungstag und Bekanntmachung des Hinweises auf die Patenterteilung: **24.11.2004**
(21) Anmeldenummer: 99125439.2
(22) Anmeldetag: 20.12.1999
(51) Int. Cl.: C09K 3/30

(54) **Pflegemittel für ärztliche bzw. zahnärztliche Instrumente**
Care composition for medical or dental instruments
Produit de soins pour les instruments médicaux ou dentaires

(30) Priorität: 23.12.1998 DE 19860024; 18.02.1999 DE 19906849
(43) Veröffentlichungstag der Anmeldung: 28.06.2000
(73) Patentinhaber: Kaltenbach & Voigt GmbH & Co. KG, 88400 Biberach/Riss (DE)
(72) Erfinder: Eibofner, Eugen, 88400 Biberach (DE); Mohr, Eugen, 88444 Ummendorf (DE)
(74) Vertreter: Schmidt-Evers, Jürgen, Dipl.-Ing.

(56) Entgegenhaltungen:
- DE-A- 2 916 552
- DE-B- 2 249 886
- GB-A- 1 342 530
- US-A- 4 486 174
- US-A- 5 057 243

## Beschreibung

Die vorliegende Erfindung betrifft ein Pflegemittel zur Pflege einer Vorrichtung, wobei das Pflegemittel ein unter Druckbeaufschlagung als Lösung vorliegendes Gemisch aus wenigstens einem lipophilen Treibmittel und wenigstens einem Öl ist. Weiterhin betrifft die vorliegende Erfindung eine Verwendung des Pflegemittels.

Zur Erhaltung der Funktionssicherheit und Verlängerung der Lebensdauer von Vorrichtungen wie beispielsweise von Instrumenten oder Instrumententeilen, die in der ärztlichen bzw. zahnärztlichen Praxis Anwendung finden, werden Pflegemittel benötigt. Dies gilt insbesondere für zahnärztliche Instrumente wie beispielsweise Handstücke, wie z.B. Winkelstücke, als auch kugel- und/oder gleitgelagerte Antriebe mit Spannelementen für Bohrer, Schleifer etc..

Obgleich die bei der Herstellung dieser Instrumente verwendeten Materialien ständig verbessert werden und auch völlig neuartige Materialien wie z. B. Keramiken zur Anwendung kommen, ist eine sorgfältige Reinigung und Schmierung insbesondere von mechanisch zusammenwirkenden Teilen wie beispielsweise von Antrieben, Getrieben. Lagern, Turbinen, etc. zwingend erforderlich.

Es ist bis heute nicht möglich, beispielsweise motor- oder luftbetriebene dentale Instrumente mit Drehzahlen bis zu 400.000 Umdrehungen pro Minute pflegefrei zu gestalten und dabei eine vergleichbare Lebensdauer wie bei Instrumenten zu erreichen, deren Antriebe, Getriebe, Lager, o.ä. regelmäßig gereinigt und neu geschmiert bzw. geölt werden.

Bei dem täglichen Gebrauch der ärztlichen bzw. zahnärztlichen Instrumente gelangen regelmäßig Verunreinigungen in die mechanisch zusammenwirkenden Teile wie beispielsweise Lager, Getriebe, Antriebe, etc.. Diese Verunreinigungen vermischen sich dabei mit dem jeweils verwendeten Öl und beeinträchtigen im hohen Maße die Schmierfähigkeit des Öles. Weiterhin zeigt das beispielsweise in hochtourigen Getrieben bzw. Antrieben verwendete Öl nach einer gewissen Zeit auch Alterungserscheinungen, die z. B. in Form von Verharzungen auftreten können, und muß auch aus diesem Grund regelmäßig ausgetauscht werden. Insofern besteht eine Notwendigkeit, mechanisch zusammenwirkende Teile wie beispielsweise die vorgenannten Getriebe, Antriebe, Lager, etc. regelmäßig von Verunreinigungen als auch von Ölrückständen zu befreien und neu zu ölen.

Ein weiteres Problem bei der Reinigung und Pflege der vorgenannten Instrumente ergibt sich häufig auch aus einer fehlerhaften Pflege. Solche Pflegefehler führen dann regelmäßig zu einem Ausfall der Instrumente. Für die Praxen entstehen somit entweder unnötige Reparaturkosten oder im Fall einer nicht behebbaren Schädigung des Intrumentes Kosten für die Neubeschaffung des ausgefallenen Instrumentes.

Derartige Pflegefehler werden insbesondere durch eine zu geringe Anzahl von Pflegevorgängen als auch durch den Einsatz von nicht geeigneten Fremdölen verursacht.

Im Stand der Technik kommt die sogenannte Öltröpfchen- oder Ölnebelschmierung zum Einsatz. Bei dieser Methode wird Öl mittels eines Dosiersystems in eine Leitung dosiert. Danach oder gleichzeitig wird dieses Öl über eine Luftzufuhr in das Instrument überführt. Bei diesem Überführungsvorgang wird das Öl zerstäubt und beispielsweise in das Getriebe oder Lager als Ölnebel eingebracht. Nachteilig ist jedoch, daß das gealterte bzw. verunreinigte Öl über dieses Verfahren nur ungenügend entfernt wird. Weiterhin ist nachteilig, daß das Verfahren mehrere getrennte Arbeitsschritte erfordert.

Aus der DE-A-4 024 171 A1 ist weiterhin ein Verfahren zum Pflegen von ärztlichen und zahnärztlichen Instrumenten bekannt, bei dem die Instrumente durch Ausblasen gereinigt und durch Auskochen in einem Wasserbad desinfiziert werden. Die Innentrocknung der Instrumente erfolgt nachfolgend durch Ausblasen mit Heißluft. Da durch diese Behandlung das zwischen den mechanisch zusammenwirkenden Teilen vorliegende Schmiermittel entfernt wird, ist es erforderlich, daß nach der Innentrocknung wieder Öl in das Instrument eingebracht wird. Das Einbringen erfolgt durch Einblasen des Öles mit Heißluft. Dieses Verfahren ist jedoch zu aufwendig.

Ein weiteres vergleichbares Verfahren zur Pflege ärztlicher bzw. zahnärztlicher Instrumente ist in der DE 4 125 223 A1 offenbart.

Aus der US-A-4 486 174 ist eine Vorrichtung zur Abgabe von Pflegemitteln an ärztliche, insbesondere zahnärztliche Handstücke zu entnehmen. Das Pflegemittel kann durch flüssige Reinigungs- und/oder Schmiermittel bzw. Öl gebildet sein. Der Druckantrieb im Behälter wird durch darin befindliches Druckgas, z.B. Luft, Stickstoff, Frigen, Propan/Butan oder dergleichen, gebildet.

Insofern besteht ein Bedarf an einem Pflegemittel, mit dem die regelmäßig erforderliche Reinigung und Schmierung bzw. das Ölen der vorgenannten Vorrichtungen einfach und zuverlässig durchgeführt werden kann.

Die Aufgabe der vorliegenden Erfindung ist es folglich, ein Pflegemittel bereitzustellen, das diesen Bedarf befriedigt.

Die der vorliegenden Erfindung zugrundeliegende Aufgabe wird durch die Bereitstellung eines Pflegemittels zur Pflege einer Vorrichtung gelöst, wobei das

Die vorliegende Erfindung betrifft ein Pflegemittel zur Pflege von ärztlichen oder zahnärztlichen Instrumenten, das ein unter Druckbeaufschlagung als Lösung vorliegendes Gemisch aus wenigstens einem lipophilen Treibmittel und wenigstens einem Öl ist, wobei das lipophile Treibmittel ein Flüssiggas ist und dieses Flüssiggas aus n-Pentan oder einer Mischung aus etwa 40 - 60 Gew.- % Propan - Butan und etwa 15 - 40 Gew.- % n-Pentan besteht.

Unter einem lipophilen Treibmittel wird im Sinne der Erfindung verstanden, daß dieses Treibmittel geeignet ist, Öl zu lösen, so daß unter Druckbeaufschlagung eine homogene Lösung aus lipophilem Treibmittel und Öl gebildet wird.

Als Öl kann im Sinne der Erfindung jedes Öl verwendet werden, d. h. Mineralöle aus Erdöl sowie vollsynthetische Öle wie z. B. Silikonöle. Weiterhin können aber auch pflanzliche oder tierische Öle verwendet werden. Im Hinblick auf die Umweltverträglichkeit wird bevorzugt biologisch abbaubares Öl wie beispielsweise ein Fettsäureesteröl o.ä. verwendet.

Im Sinne der Erfindung liegt das Gemisch aus wenigstens einem lipophilen Treibmittel und wenigsten einem Öl regelmäßig in einem Druckbehälter wie beispielsweise einer herkömmlichen Spraydose vor. Insofern erfolgt die Druckbeaufschlagung des Gemisches aus lipophilem Treibmittel und Öl im wesentlichen durch den Druck, den das lipophile Treibmittel über der Lösung in der Spraydose erzeugt.

Sobald das als Lösung vorliegende Gemisch aus dem Druckbehälter über eine Abgabeeinrichtung vorzugsweise als Stoßmenge, d.h. stoßweise abgegeben wird, erfolgt eine Entspannung der unter Druck stehenden Lösung auf Umgebungsdruck, d. h. regelmäßig auf Normaldruck. Bei diesem Entspannungsvorgang verdampft das lipophile Treibmittel sofort. Dabei vergrößert sich das Volumen des lipophilen Treibmittels, bezogen auf das Volumen des unter Druck stehenden Pflegemittels, auf ein Mehrhundertfaches. Makroskopisch läßt sich dieser Vorgang als ein "Kochen" oder "Sprudeln" des erfindungsgemäßen Pflegemittels beschreiben.

Bedingt durch dieses "Kochen" schäumt das erfindungsgemäße Pflegemittel sehr stark auf. Dieser Effekt des Schäumens bewirkt eine wirksame Reinigung, da das erfindungsgemäße Pflegemittel wirksam in alle Bereiche des zu reinigenden Instrumentes ein- bzw. vordringt. Infolge des starken Schäumens des Pflegemittels kommen folglich beispielsweise sämtliche in einem aufwendig konstruierten Getriebe vorhandenen Zahnräder mit dem Pflegemittel in Kontakt.

Sobald das schäumende Pflegemittel mit den in dem Instrument zu reinigenden Teilen in Kontakt kommt, werden die Verunreinigungen zum einen durch die mechanische Einwirkung mitgerissen und zum anderen beispielsweise zu entfernende Ölrückstände durch das lipophile Treibmittel chemisch gelöst. Die von dem Pflegemittel aufgenommenen Verunreinigungen werden dann in Fließrichtung des sich entspannenden Gases aus der Vorrichtung bzw. von der Vorrichtung weg transportiert.

Das erfindungsgemäße Pflegemittel erlaubt dabei zuverlässig eine Reinigung von beispielsweise Antrieben, Getrieben etc., ohne daß diese während des Reinigungsvorgangs angetrieben werden müssen. Dadurch, daß ein Rotationsantrieb der zu reinigenden Instrumente nicht erforderlich ist, wird die Pflege von Vorrichtungen, d.h. beispielsweise von zahnärztlichen Handstücken wesentlich vereinfacht. Selbstverständlich können die zu pflegenden Getriebe, Antriebe, Lager, etc. auch unter Ausnutzung der Rotationswirkung mit dem erfindungsgemäßen Pflegemittel gereinigt werden.

Nach Abklingen des durch den Entspannungsvorgang bedingten Schäumens des Pflegemittels werden die so von Verunreinigungen und Ölrückständen befreiten Teile, d. h. beispielsweise Getriebe, Antriebe, Lager, Turbinen, etc. durch das im erfindungsgemäßen Pflegemittel enthaltene Öl zuverlässig mit neuem Schmiermittel versehen.

Das in dem erfindungsgemäßen Pflegemittel enthaltene Öl wird durch den Entspannungsvorgang auf Normaldruck durch Verdampfung des lipophilen Treibmittels unter Aerosolbildung fein zerstäubt. Das in dem Aerosol fein zerstäubte Öl wird dann auf die gereinigten Teile gleichmäßig aufgetragen. Da das lipophile Treibmittel vollständig verdampft, wird folglich ein unverdünnter Ölfilm, d.h. ein Ölfilm der kein Treibmittel mehr enthält, auf die zu schmierenden bzw. zu ölenden Teile aufgebracht und insofern eine hervorragende Schmierung gewährleistet.

Durch Einstellung der Mengenverhältnisse von Öl zu lipophilem Treibmittel in dem erfindungsgemäßen Pflegemittel kann die auf die mechanischen Teile aufgebrachte Schichtdicke des Ölfilms eingestellt werden. Das erfindungsgemäße Pflegemittel erlaubt somit eine genau dosierte Aufbringung von Öl auf die zu schmierenden bzw. zu ölenden Instrumententeile. Insofern kommt es nach der Anwendung des erfindungsgemäßen Pflegemittels nicht zu einem Austreten von überschüssigem Öl aus dem Instrument bzw. der Vorrichtung, wie dies häufig der Fall ist, wenn das Öl als reine Substanz aufgebracht wird.

Im Sinne der Erfindung bildet das lipophile Treibmittel mit dem verwendeten Öl unter Druckbeaufschlagung eine homogene Lösung. Weiterhin kann im Sinne der Erfindung jedes Öl oder Schmieröl verwendet werden, sofern es mit dem verwendeten lipophilem Treibmittel unter Druckbeaufschlagung eine homogene Lösung bildet.

Erfindungsgemäß ist das lipophile Treibmittel ein Flüssiggas.

Unter einem Flüssiggas wird im Sinne der Erfindung ein unter Druck verflüssigtes Gas verstanden. Die Verwendung eines verflüssigten Gases bzw. eines Flüssiggases als lipophiles Treibmittel ist äußerst vorteilhaft, da der in dem Druckbehälter über dem erfindungsgemäßen Pflegemittel durch das lipophile Treibmittel erzeugte Druck konstant ist. Insofern liegt immer ein gleichbleibender Arbeitsdruck vor, der bei der Abgabe des erfindungsgemäßen Pflegemittels aus dem Druckbehälter, d.h. bei der Entspannung auf Normaldruck zu einer reproduzierbaren gleichmäßigen Zerstäubung des in dem erfindungsgemäßen Pflegemittel enthaltenen Öles führt.

Erfindungsgemäß wird das Flüssiggas aus der Gruppe, die aus n-Pentan sowie Mischungen aus Propan, Butan und n-Pentan besteht, ausgewählt.

Bei Verwendung der vorgenannten Flüssiggase werden äußerst vorteilhaft Schädigungen der Umwelt wie z. B. Schädigungen der Ozonschicht, die bei Verwendung von den bekannten chlorierten niedermolekularen Kohlenwasserstoffen als Treibmittel nicht ausgeschlossen werden können, vermieden. Die genannten Flüssiggase können dabei einzeln oder auch in beliebiger Kombination miteinander verwendet werden.

Da das erfindungsgemäße Pflegemittel eine unter Druck stehende Lösung ist, die bei Entspannung auf Normaldruck schlagartig verdampft, kommt es aufgrund des Joule-Thomson-Effektes zu einer Abkühlung des expandierenden Flüssiggases.

Bei Verwendung einer Mischung aus Propan, Butan und n-Pentan kann dieser Abkühlungseffekt durch geeignete Mischungsverhältnisse dieser Flüssiggase zueinander so eingestellt werden, daß die Temperatur des zu reinigenden Instrumentes nicht unter 0°C absinkt. Somit kann bei dem Reinigungs- bzw. Schmierungsvorgang (d.h. dem Aufbringen von neuem Öl) äußerst vorteilhaft die Abscheidung von Luftfeuchtigkeit in Form von Eis auf dem bzw. in dem zu reinigenden Instrument oder Instrumententeil vermieden werden.

Die jeweils einzustellenden Mischungsverhältnisse von Propan, Butan sowie n-Pentan, um ein "Einfrieren" des zu pflegenden Instrumentes oder Instrumententeils zu vermeiden, hängen natürlich auch von dem zu pflegenden Instrument ab. Wenn das zu pflegende Instrument massiver Natur ist und insofern über eine größere Wärmekapazität verfügt und sich demzufolge der Abkühlungseffekt des expandierenden Gases nur in geringem Umfang auf das zu pflegende Instrument überträgt, können andere Mischungsverhältnisse bei der Zusammensetzung des Flüssiggases gewählt werden, verglichen mit einem Instrument, das eine geringere Wärmekapazität aufweist.

Erfindungsgemäß umfaßt das Pflegemittel etwa 40 - 60 Gew.-% Propan - Butan und etwa 15 bis 40 Gew.-% n-Pentan.

Insbesondere umfaßt das Pflegemittel etwa 60 Gew.-% Propan - Butan und etwa 25 Gew.-% n-Pentan. Bevorzugt ist das erfindungsgemäße Pflegemittel dabei mit einem Druck von etwa 3,5 bar beaufschlagt.

Der Siedepunkt des zuletzt genannten Flüssiggasgemisches liegt bei ca. - 5° Celsius. Bei der Pflege beispielsweise eines zahnärztlichen Instrumentariums wie beispielsweise von Turbinen, Hand- und Winkelstücken mit einer Masse von etwa 80 g und einer Temperatur, die der Zimmertemperatur entspricht, werden diese bei der Reinigung mit einer Stoßmenge von etwa 0,5 g des erfindungsgemäßen Pflegemittels nicht auf unter 0°C abgekühlt. Insofern kommt es zu keiner Abscheidung der Umgebungsfeuchtigkeit in Form von Eis auf den bzw. in den jeweiligen Instrumenten.

Bedingt durch die üblicherweise in unterschiedlichem Ausmaß auftretende Abkühlung der zu reinigenden Instrumente bzw. Instrumententeile, wird der weitere Verdampfungsvorgang des Flüssiggases etwas verzögert. Diese Verzögerung des Verdampfungsvorganges verbessert die Reinigungswirkung des erfindungsgemäßen Pflegemittels, da das Schäumen des Pflegemittels insoweit etwas länger andauert.

Ein höherer Anteil von Propan und Butan in der verwendeten Flüssiggasmischung senkt den Siedepunkt des Flüssiggasgemisches ab. Hingegen führt das Vorhandensein von n-Pentan zu einer Erhöhung des Siedepunktes des Flüssiggasgemisches. Insofern kann bei Verwendung eines größeren Anteils von n-Pentan in dem verwendeten Flüssiggasgemisch der bei der Abgabe des Pflegemittels aus dem Druckbehälter durch die Entspannung des Pflegemittels auftretende Abkühlungseffekt des Aerosols dahingehend beeinflußt werden, daß die Abkühlung des Aerosols in einem geringeren Umfang erfolgt. D.h., ein größerer Anteil von n-Pentan in dem Flüssiggasgemisch bewirkt, daß das entstehende Aerosol sich nicht so stark abkühlt und folglich die zu reinigenden Instrumente bzw. Instrumententeile nach dem Inkontaktbringen mit dem Aerosol auch nicht so stark abgekühlt werden.

Bevorzugt ist das Öl in dem Pflegemittel in einer Menge von etwa 1 bis 45 Gew.-%, insbesondere von etwa 5 bis etwa 30 Gew.-%, enthalten.

Bei diesen Mischungsverhältnissen von Öl zu lipophilem Treibmittel ist das lipophile Treibmittel im Hinblick auf die Aufnahmefähigkeit von Öl nicht abgesättigt. D.h., daß lipophile Treibmittel kann über die bereits vorliegende Ölbeladung in dem Pflegemittel noch weiteres Öl wie zum Beispiel die zu entfernenden Ölrückstände aufnehmen.

Die Verwendung des erfindungsgemäßen Pflegemittels ermöglicht somit die Entfernung von in den bzw. an den zu reinigenden Instrumenten bzw. Instrumententeilen anhaftendem Restöl, das von dem lipophilen Treibmittel gelöst, d.h. aufgenommen und aus der zu reinigenden Vorrichtung (bzw. dem Instrument oder Instrumententeil) über den Gasstrom bzw. Aerosolstrom herausgetragen wird.

Weiterhin erlauben die oben genannten Mengen an Öl in dem erfindungsgemäßen Pflegemittel die Aufbringung eines gleichmäßigen Ölfilmes auf die gereinigten Gegenstände. Über den Gehalt des Öles in dem Pflegemittel kann insbesondere die Schichtdicke des aufzubringenden Ölfilmes beeinflußt werden. Bei Absenkung des Gehaltes an Öl in dem Pflegemittel wird der auf dem gereinigten Gegenstand aufgebrachte Ölfilm eine geringere Schichtdicke aufweisen. Umgekehrt wird, wenn der Ölgehalt in dem Pflegemittel größer ist, der aufgebrachte Ölfilm eine größere Schichtdicke aufweisen. Insofern können in Abhängigkeit von dem jeweiligen Verwendungszweck die Mengenverhältnisse von Öl zu lipophilem Treibmittel in dem erfindungsgemäßen Pflegemittel entsprechend eingestellt werden.

Das erfindungsgemäße Pflegemittel wird zur Pflege einer Vorrichtung verwendet.

Das erfindungsgemäße Pflegemittel kann insbesondere zur Reinigung von Vorrichtungen verwendet werden, die regelmäßig gereinigt und geölt werden müssen.

Insbesondere bei ärztlichen und zahnärztlichen Instrumenten oder Instrumententeilen kann das vorliegende Pflegemittel äußerst vorteilhaft verwendet werden. Bei dentalen Instrumenten müssen beispielsweise Antriebe, Getriebe, Turbinen, Lager, Schleifbürsten und weitere mechanisch zusammenwirkende Teile, die teilweise mit hohen Drehzahlen betrieben werden, regelmäßig gereinigt und geölt werden.

Bedingt durch das Aufschäumen des erfindungsgemäßen Pflegemittels bei Abgabe der unter Druck stehenden Lösung auf Normaldruck werden zuverlässig Verunreinigungen und Ölrückstände auch bei Teilen mit schwieriger Formgebung entfernt. Äußerst vorteilhaft ist bei dem vorliegenden Pflegemittel die Reinigungswirkung und die Schmierwirkung vereinigt. Nach Beendigung des durch Schäumen bewirkten Reinigungsvorgangs werden die so gereinigten Teile mit dem in dem Pflegemittel enthaltenen Öl neu geölt. Dadurch, daß die Zusammensetzung des Pflegemittels auf die jeweilige Verwendung genau abgestimmt werden kann, werden Pflegefehler, die durch eine ungenügende Reinigung oder durch Verwendung eines falschen Öles verursacht werden können, vermieden.

Das Verfahren kann so ausgestaltet werden, daß "auf Knopfdruck" eine vorher definierte Stoßmenge an Pflegemittel in bzw. auf das zu pflegende Instrument bzw. Instrumententeil injiziert wird. Somit wird eine einfache und regelmäßige Pflege der Instrumente ermöglicht. Insbesondere kann die Zusammensetzung des erfindungsgemäßen Pflegemittels in Abhängigkeit von dem jeweiligen Verwendungszweck optimal eingestellt werden. Die Pflege kann insofern standardisiert werden. D.h., bei jedem Pflegevorgang wird beispielsweise eine konstante Menge an Öl in das zu pflegende Instrument, Instrumententeil oder die zu pflegende Vorrichtung eingebracht, so daß eine ausreichende Schmierung gewährleistet ist. Weiterhin bewirkt diese Standardisierung auch, daß nicht zuviel Öl auf das zu schmierende Teil aufgebracht wird, so daß die Gefahr, daß das Öl unerwünschterweise aus der Vorrichtung austritt, minimiert wird.

In einem Verfahren zum Pflegen einer Vorrichtung wird das in einem Druckbehälter vorliegende Pflegemittel über eine am Druckbehälter angeordnete Abgabeeinrichtung an die und/oder in die zu pflegende Vorrichtung gegeben und auf Normaldruck entspannt, wobei das in dem Pflegemittel enthaltene lipophile Treibmittel unmittelbar verdampft und ein Aerosol entsteht, wobei das entstehende Aerosol die an der und/oder in der Vorrichtung enthaltenen Ölrückstände sowie gegebenenfalls weiter vorliegende Verunreinigungen aufnimmt und abträgt und das in dem Pflegemittel enthaltene Öl in Form eines Ölfilms auf die Vorrichtung aufgebracht wird.

Weiterhin kann auch eine Einrichtung vorgesehen sein, in der die aus der zu reinigenden Vorrichtung über den Gasstrom herausgetragenen Verunreinigungen und Ölrückstände aufgefangen werden. Der verwendete Druckbehälter kann in seinem Aufbau dem Aufbau einer herkömmlichen Spraydose beispielsweise aus Weißblech, Aluminium, Kunststoff oder Glas entsprechen. Ein Druckbehälter aus Weißblech kann kostengünstig gefertigt werden und über Magnete an jedem Gerät angebracht werden.

### Beispiele

Die nachfolgend aufgeführten Beispiele dienen lediglich der weiteren Veranschaulichung der Erfindung und sollen nicht als eine Beschränkung des Erfindungsgedankens verstanden werden.

Im folgenden werden beispielhafte Zusammensetzungen des erfindungsgemäßen Pflegemittels angegeben. Die erfindungsgemäßen Pflegemittel liegen dabei jeweils in einem Druckbehälter vor, wobei das Pflegemittel mit einem Druck von etwa 3,5 bar beaufschlagt ist.

### Beispiel 1:

15 - 40 Gew.-% n-Pentan
40 - 60 Gew.-% Propan - Butan
10 - 30 Gew.-% Öl

### Beispiel 2:

25 Gew.-% n-Pentan
60 Gew.-% Propan - Butan
15 Gew.-% Öl

### Beispiel 3:

Des weiteren wurde die Reinigungswirkung des erfindungsgemäßen Pflegemittels mit der Reinigungswirkung eines herkömmlichen Pflegemittels verglichen.

Als Untersuchungsgegenstand wurde ein Handstück, d.h. ein Winkelstück aus der zahnärztlichen Praxis verwendet. Zu Vergleichszwecken wurden mehrere Winkelstücke mit identischem Aufbau jeweils durch Einbringen einer Testmischung einer Standardverschmutzung aus der Filtertechnologie zunächst verschmutzt. Dabei wurden jeweils 10 µl dieser Testmischung in die Winkelstücke eingespritzt.

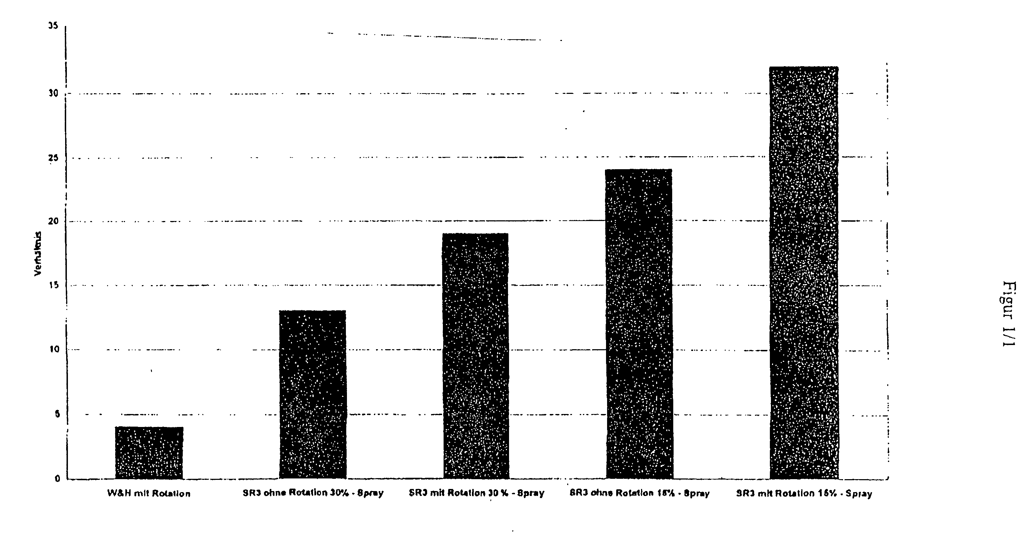

Im Anschluß daran wurden diese Winkelstücke mit verschiedenen Pflegemitteln sowie mit und ohne Rotation des jeweiligen Antriebs gereinigt und die ausgetragene Schmutzmenge jeweils mit dem Partikelmeßsystem Hydra der Firma Klotz Analytische Meßtechnik/Lasertechnologien in der Medizin-, Meß- und Umwelttechnik, D-75378 Bad Liebenzell gemessen. Das erfindungsgemäße Pflegemittel wurde dabei mit dem Pflegemittel "Service Öl", An. Nr. 02675900 der Firma W&H Dentalwerk Bürmoos GmbH, A-5111 Bürmoos, Östereich verglichen. Das Service Öl" der Firma W&H Dentalwerk Bürmoos GmbH ist ein Öl für die Pflege von Turbinenwinkelstücken, Hand- und Winkelstücken, luftbetriebenen Zahnsteinentfernungsinstrumenten und Luftmotoren. Die Ergebnisse sind in Figur 1 gezeigt.

Die Angabe 15 % - Spray bzw. 30 %- Spray weist jeweils auf den Gehalt an Öl in dem erfindungsgemäßen Pflegemittel hin. Die Zusammensetzung des 15 % - Sprays ist oben in Beispiel 2 angegeben. Bei dem 30 % - Spray sind die Anteile des Treibmittels in der Zusammensetzung des Pflegemittels entsprechend verringert. Das Vergleichsmittel der Firma W&H sowie die erfindungsgemäßen Pflegemittel wurden dabei mit einem Sprayrotor 3 (SR3) in das jeweils gereinigte Winkelstück eingebracht. Der Sprayrotor 3 ist in der DE 195 09 180.9 beschrieben.

Auf der y-Achse in Figur 1 ist das Verhältnis der in das Winkelstück eingebrachten Partikelmenge (durch Einspritzen der Testmischung der Standardverschmutzung) zu der mit dem jeweils verwendeten Pflegemittel aus dem Winkelstück herausgetragenen Partikelmenge abgetragen.

Wie aus Figur 1 ersichtlich ist, weist das erfindungsgemäße Pflegemittel im Vergleich mit dem herkömmlichen Pflegemittel eine hervorragende Reinigungswirkung auf. Die Reinigungswirkung zeigt sich insbesondere dadurch, daß die Reinigungswirkung bei dem erfindungsgemäßen Pflegemittel ohne Rotation sehr viel besser ist als bei dem Vergleichsreinigungsmittel mit Rotation ist. Bei Rotation des Antriebs wird die Reinigungswirkung des erfindungsgemäßen Pflegemittels durch die Rotationswirkung noch weiter verbessert.

Gemäß der vorliegenden Erfindung wird folglich ein Pflegemittel bereitgestellt, das zugleich eine Reinigung von Vorrichtungen wie beispielsweise von Handstücken in der zahnärztlichen Praxis als auch ein nachfolgendes Schmieren bzw. Ölen der Vorrichtung bzw. des Handstückes erlaubt. Dem Fachmann ist klar, daß es über die in dieser Beschreibung aufgeführten Verwendungen noch weitere Verwendungsmöglichkeiten gibt.

## Patentansprüche

1. Pflegemittel zur Pflege von ärztlichen oder zahnärztlichen Instrumenten, das ein unter Druckbeaufschlagung als Lösung vorliegendes Gemisch aus wenigstens einem lipophilen Treibmittel und wenigstens einem Öl ist, wobei das lipophile Treibmittel ein Flüssiggas ist,
**dadurch gekennzeichnet,**
**dass** das Flüssiggas aus n-Pentan besteht oder das Pflegemittel eine Mischung aus etwa 40 - 60 Gew.-% Propan - Butan und etwa 15 - 40 Gew.- % n-Pentan umfasst.

2. Pflegemittel nach Anspruch 1,
**dadurch gekennzeichnet,**
**dass** das Öl in dem Pflegemittel in einer Menge von etwa 1 bis etwa 45 Gew.-%, insbesondere von etwa 5 bis etwa 30 Gew.-%, enthalten ist.

3. Verwendung eines Pflegemittels nach Anspruch 1 oder 2 zur Pflege eines ärztlichen oder zahnärztlichen Instruments.

## Claims

1. Care composition for the care of medical or dental instruments, which is a mixture, present as a solution under pressure, of at least one lipophilic drive medium and at least one oil, wherein the lipophilic drive medium is a liquid gas,
**characterised in that**,
the liquid gas is of n-pentane or the care composition includes a mixture of about 40-60 weight % propane-butane and about 15-40 weight % n-pentane.

2. Care composition according to claim 1,
**characterised in that**,
the oil in the care composition is contained in a quantity from about 1 to about 45 weight %, in particular from about 5 to about 30 weight %.

3. Use of a care composition according to claim 1 or 2 for the care of a medical or dental instrument.

## Revendications

1. Produit d'entretien pour l'entretien d'instruments médicaux ou dentaires, qui est un mélange, se présentant sous la forme d'une solution lorsqu'il est pressurisé, d'au moins un agent propulseur lipophile et d'au moins une huile, dans lequel l'agent propulseur lipophile est un gaz liquéfié, **caractérisé en ce que** le gaz liquéfié se compose de n-pentane ou **en ce que** le produit d'entretien comprend un mélange d'environ 40 à 60% en poids de propane-butane et d'environ 15 à 40% en poids de n-pentane.

2. Produit d'entretien selon la revendication 1, **caractérisé en ce que** l'huile contenue dans le produit d'entretien est présente en une quantité d'environ 1 à environ 45% en poids, en particulier d'environ 5 à environ 30% en poids.

3. Utilisation d'un produit d'entretien selon la revendication 1 ou la revendication 2 pour l'entretien d'un instrument médical ou dentaire.
